# EUROPEAN PATENT APPLICATION

(11) **EP 2 902 858 A1**
(43) Date of publication of application: **05.08.2015**
(21) Application number: 14811748.4
(22) Date of filing: 23.04.2014
(51) Int. Cl.: G05B 19/042

(54) **METHOD AND DEVICE FOR REMOTE RESTART**

(30) Priority: 06.11.2013 CN 201310547691
(71) Applicant: State Grid Corporation of China, Beijing 100031 (CN); State Grid Zhejiang Hangzhou Yuhang Power Supply Company, LinPing, YuHang Hangzhou, Zhejiang 311100 (CN); Hangzhou Power Supply Company of State Grid Zhejiang Electric Power Company, Hangzhou, Zhejiang 310000 (CN); State Grid Zhejiang Electric Power Company, Hangzhou, Zhejiang 310013 (CN)
(72) Inventor: TU, Yongwei, Hangzhou, Zhejiang 311100 (CN); FANG, Yanlin, Hangzhou, Zhejiang 311100 (CN); DING, Li, Hangzhou, Zhejiang 311100 (CN); BAO, Zhengmin, Hangzhou, Zhejiang 311100 (CN); CHEN, Yue, Hangzhou, Zhejiang 311100 (CN); YANG, Chaoyang, Hangzhou, Zhejiang 311100 (CN); LI, Tiyin, Hangzhou, Zhejiang 311100 (CN)
(74) Representative: Brevalex
(86) International application number: PCT/CN2014/076009
(87) International publication number: WO 2015/067008

(57) **Abstract**

The invention provides a remote power-failure restarting method and a device. The remote power-failure restarting device comprises a signal processing chip, a relay driving chip and a relay, wherein the output end of the signal processing chip is connected with the input end of the relay driving chip; the output end of the relay driving chip is connected with a coil of the relay, and one end of the normally open contact of the relay is connected with a power supply, and the other end is connected with a power supply end required to be cut off for restarting the device. The signal processing chip receives a power-failure restarting command sent by the external world, and analyzes the power-failure restarting command to obtain a branch required to be cut off for restarting the device; the signal processing chip outputs a driving command to the relay driving chip, the relay driving chip controls the closure of the normally open contact of the relay after breaking according to the driving command, so that the power-failure restarting control to the device is realized, workers are not required to implement the power-failure restarting to the device in scene, the workload is reduced, and the time is saved.

## Description

The application claims priority to Chinese patent application No. 201310547691.2, titled "REMOTE POWER FAILURE RESTARTING METHOD AND DEVICE" and filed with the Chinese State Intellectual Property Office on November 6, 2013, which is hereby incorporated by reference in its entirety.

### FIELD

The disclosure relates to the field of the device restarting technology, and in particular to a method and a device for remote power-off and restarting.

### BACKGROUND

During a running process of an image monitoring system of a substation, sometimes a device (for example a camera) located at the front end may crash due to some reasons (for example the Ethernet interface has been running for a long time period). An existing image monitoring system platform can only remotely control the soft start of a device to reset a software within the device; in the case that the device crashes, the device can not receive the soft start command sent from the image monitoring system platform, resulting in that the device can not be restarted; then, the device has to be power-off and restarted to return to be normal. In the above case that occurs, a related technical staff needs to be dispatched to the scene to perform power-off and restarting to the device, which increases workload beyond wasting time. Hence, how to control the power-off and restarting of the device becomes a technical problem to be solved urgently for those skilled in the art.

### SUMMARY

In view of the above, a method and a device for remote power-off and restarting are provided according to the disclosure, to control the power-off and restarting of the device.

A device for remote power-off and restarting, including:
a signal processing chip configured to receive an instruction for power-off and restarting sent from outside and analyze the instruction for power-off and restarting, to obtain a branch on which a device to be powered off and restarted is located;
a relay driving chip, wherein an input of the relay driving chip is connected to an output of the signal processing chip, to obtain a driving instruction matching the device to be powered off and restarted output from the signal processing chip; and
a relay with a coil and a normally open contact, wherein the coil is connected to an output of the relay driving chip, one end of the normally open contact is connected to a power supply, the other end of the normally open contact is connected to a supply end of the device to be powered off and restarted, and the coil obtains a digital signal output from the relay driving chip and controls the normally open contact to be open and then closed.

Preferably, the signal processing chip may be configured to receive the instruction for power-off and restarting sent from outside via an RS485 chip connected to the signal processing chip.

Preferably, an interface chip of the RS485 chip is a Maxim integrated (MAXIM) MAX485 chip.

Preferably, the MAXIM MAX485 chip includes a drive and a receiver connected with each other, and the drive may be configured to drive the receiver to receive a signal.

Preferably, the signal processing chip is a single chip microcomputer.

Preferably, a model of the single chip microcomputer is 80C51.

Preferably, an interface of the single chip microcomputer is a JTAG interface.

Preferably, a model of the relay driving chip is ULN2804A.

Preferably, the device further include a power supply circuit, which includes an inverter-rectifier circuit and a three-terminal voltage stabilizing integrated circuit, where
an input of the inverter-rectifier circuit is connected to an external power supply, an output of the inverter-rectifier circuit is connected to an input of the three-terminal voltage stabilizing integrated circuit, and an output of the three-terminal voltage stabilizing integrated circuit is used as an output of the power supply circuit and is connected to a supply end of the device for remote power-off and restarting.

Preferably, the three-terminal voltage stabilizing integrated circuit is a three-terminal voltage stabilizing integrated circuit chip with a model 7805.

A method for remote power outage and restarting, applied in a device for remote power-off and restarting, wherein the device for remote power-off and restarting includes a signal processing chip, a relay driving chip and a relay, an output of the signal processing chip is connected to an input of the relay driving chip, an output of the relay driving chip is connected to a coil of the relay, one end of a normally open contact of the relay is connected to a power supply, and the other end of the normally open contact is connected to a supply end of a device to be powered off and restarted, the method includes:
receiving, by the signal processing chip, an instruction for power-off and restarting sent from outside, analyzing, by the signal processing chip, the instruction to obtain a branch on which the device to be powered off and restarted is located, and generating and outputting, by the signal processing chip, a driving instruction matching the device to be powered off and restarted;
obtaining, by the relay driving chip, the driving instruction matching the device to be powered off and restarted output from the signal processing chip, and generating and outputting, by the relay driving chip, a digital signal; and
obtaining, by the coil of the relay, the digital signal output from the relay driving chip, and controlling, by the coil of the relay, the normally open contact to be open and then closed.

Preferably, the receiving, by the signal processing chip, an instruction for power-off and restarting sent from outside includes:
receiving, by the signal processing chip, the instruction for power-off and restarting sent from outside via an RS485 chip connected to the signal processing chip.

According to the technical solutions described above, a method and a device for remote power-off and restarting are provided according to the disclosure; the device for remote power-off and restarting includes a signal processing chip, a relay driving chip and a relay; an output of the signal processing chip is connected to an input of the relay driving chip, an output of the relay driving chip is connected to a coil of the relay, one end of a normally open contact of the relay is connected to a power supply, and the other end of the normally open contact is connected to a supply end of the device to be powered off and restarted. The signal processing chip receives the instruction for power-off and restarting sent from outside, and analyzes the instruction to obtain the branch on which the device to be powered off and restarted is located; the signal processing chip outputs the driving instruction to the relay driving chip; the relay driving chip controls the normally open contact of the relay to be open and then closed based on the driving instruction, thereby implementing control of the power-off and restarting of the device. Thereby the technical staff is not needed to perform power-off and restarting to the device at the scene, thereby reducing workload and saving time.

### BRIEF DESCRIPTION OF THE DRAWINGS

In order to illustrate the technical solutions in the embodiments or the conventional technology more clearly, hereinafter the drawings for the description of the embodiments or the conventional technology will be introduced simply. Apparently, the following described drawings are only some embodiments of the invention. Other drawings may be obtained based on these drawings by those skilled in the art without any creative work.
Figure 1 is a schematic structural diagram of a device for remote power-off and restarting according to an embodiment of the invention; and
Figure 2 is a flowchart of a method for remote power-off and restarting according to an embodiment of the invention.

### DETAILED DESCRIPTION OF THE EMBODIMENTS

Hereinafter the technical solutions of the embodiments of the invention will be described clearly and completely in conjunction with the drawings of the embodiments of the invention. Apparently, the described embodiments are only some embodiments, not all the embodiments. All of other embodiments obtained based on the embodiments of the invention by those skilled in the art without any creative work fall within the scope of protection of the disclosure.

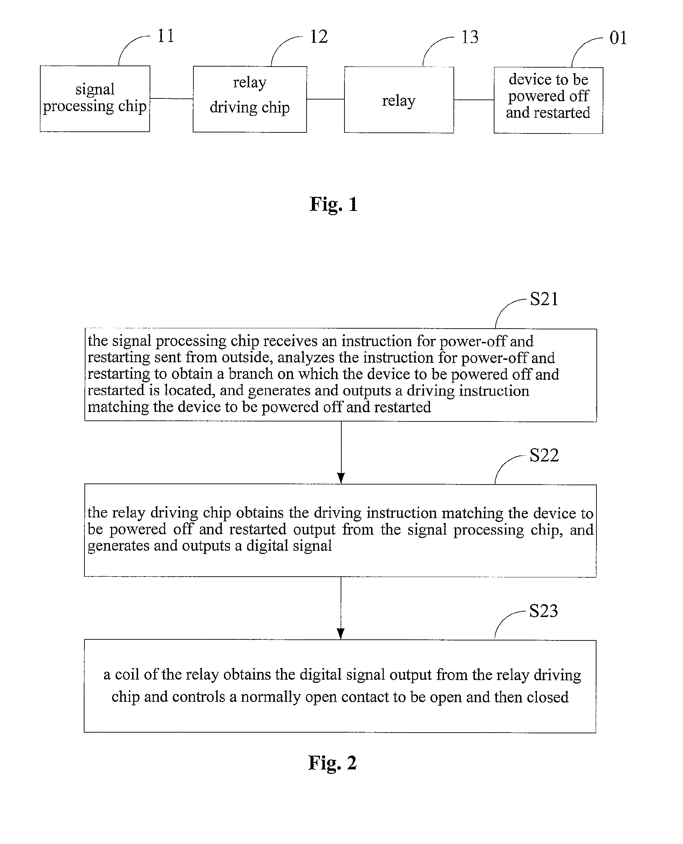

Reference is made to Figure 1 which is a schematic structural diagram of a device for remote power-off and restarting according to an embodiment of the invention. The device for power-off and restarting includes a signal processing chip 11, a relay driving chip 12 and a relay 13.

The signal processing chip 11 is configured to receive an instruction for power-off and restarting sent from outside and analyze the instruction, to obtain a branch on which a device 01 to be powered off and restarted is located.

An input of the relay driving chip 12 is connected to an output of the signal processing chip 11, to obtain a driving instruction matching the device 01 to be powered off and restarted output from the signal processing chip 11.

The relay 13 is provided with a coil and a normally open contact. The coil is connected to an output of the relay driving chip 12. One end of the normally open contact is connected to a power supply, and the other end of the normally open contact is connected to a supply end of the device 01 to be powered off and restarted. The coil obtains a digital signal output from the relay driving chip 12 and controls the normally open contact to be open and then closed.

In summary, the signal processing chip 11 receives the instruction for power-off and restarting sent from outside, and analyzes the instruction for power-off and restarting to obtain the branch on which the device 01 to be powered off and restarted is located; then the signal processing chip 11 outputs a driving instruction to the relay driving chip 12; the relay driving chip 12 may control the normally open contact of the relay 13 to be open and then closed based on the driving instruction, thereby implementing control of the power-off and restarting of the device. Then the technical staff does not need to perform power-off and restarting to the device at the scene, and thereby reducing workload and saving time.

It should be noted that, the existing image monitoring system platform may send an instruction for power-off and restarting to the signal processing chip 11, then in the case that remote power-off and restarting for the device is needed, it is only need to send by the original image monitoring system platform at the central office the instruction for power-off and restarting; then the device for remote power-off and restarting controls a corresponding device to be powered off and restarted based on the received instruction for power-off and restarting, and the technical staff does not need not to perform power-off and restarting to the device at the scene, thereby reducing workload and saving time.

The device 01 to be powered off and restarted may be a camera within a substation.

The device for remote power-off and restarting is connected with the camera via a connection line of a 485 interface, in the case that both the device for remote power-off and restarting and the camera are provided with the 485 interfaces.

Preferably, one relay 13 may be connected to multiple cameras.

It should be noted that, the signal processing chip 11 receives the instruction for power-off and restarting sent from outside via an RS485 chip connected with the signal processing chip 11.

Specifically, the RS485 chip is configured to perform analog-digital conversion to the received instruction for power-off and restarting, and then transmit the converted instruction for power-off and restarting in a form of a digital signal to the signal processing chip 11.

An interface chip of the RS485 chip may be a MAXIM MAX485 chip, which is a low power consumption receiver for RS-485 communication. Each MAXIM MAX485 chip has a drive and a receiver connected with each other, and the drive is configured to drive the receiver to receive a signal. A slew rate of the drive is not limited, which may reach a transmission speed up to 2.5 Mbps.

Preferably, in the case that the signal processing chip 11 is a single chip microcomputer and the interface chip of the RS485 chip is the MAXIM MAX485 chip, it is only needed that an output RO of the receiver of the MAXIM MAX485 chip is connected to a pin RXD of the single chip microcomputer for receiving data, and an input DI of the drive is connected to a pin TXD of the single chip microcomputer for sending data. Since the MAXIM MAX485 chip works under a half-duplex state, the two pins (the pin RXD and the pin TXD) can be controlled only by one pin of the single chip microcomputer.

Preferably, the signal processing chip 11 may be a single chip microcomputer with a model 80C51. The 80C51 single chip microcomputer has the following advantages: the processing speed is fastest at present; the low noise wiring technology and driving technology are adopted to reduce the system noise and improve the output capability of the single chip microcomputer; the low frequency clock is adopted to ensure the processing speed of the single chip microcomputer and reduce noise; a JTAG interface is adopted to change from conventional simulation debugging to system debugging based on the JTAG interface for the single chip microcomputer.

The relay driving chip 12 may employ a relay driving chip with a model ULN2804A.

In the embodiment described above, the device for remote power-off and restarting further includes a power supply circuit, which includes an inverter-rectifier circuit and a three-terminal voltage stabilizing integrated circuit.

An input of the inverter-rectifier circuit is connected to an external power supply, an output of the inverter-rectifier circuit is connected to an input of the three-terminal voltage stabilizing integrated circuit, and an output of the three-terminal voltage stabilizing integrated circuit is used as an output of the power supply circuit and is connected to a supply end of the device for remote power outage and restarting.

The three-terminal voltage stabilizing integrated circuit is a three-terminal voltage stabilizing integrated circuit chip with a model 7805.

Corresponding to the device for remote power-off and restarting described above, a method for remote power-off and restarting is also provided according to the disclosure.

Reference is made to Figure 2 which is a flowchart of a method for remote power-off and restarting according to an embodiment of the invention. The method for remote power-off and restarting is applied in a device for remote power-off and restarting, which includes a signal processing chip 11, a relay driving chip 12 and a relay 13. An output of the signal processing chip 11 is connected to an input of the relay driving chip 12, and an output of the relay driving chip 12 is connected to a coil of the relay 13. One end of a normally open contact of the relay 13 is connected to a power supply, and the other end of the normally open contact is connected to a supply end of the device 01 to be powered off and restarted (see Figure 1 for details).

The method for remote power-off and restarting includes step S21 to step S23.

In step S21, the signal processing chip 11 receives an instruction for power-off and restarting sent from outside, analyzes the instruction for power-off and restarting to obtain a branch on which the device to be powered off and restarted is located, and generates and outputs a driving instruction matching the device to be powered off and restarted.

In step S22, the relay driving chip 12 obtains the driving instruction matching the device to be powered off and restarted output from the signal processing chip 11, and generates and outputs a digital signal.

In step S23, the coil of the relay 13 obtains the digital signal output from the relay driving chip 12 and controls the normally open contact to be open and then closed.

In summary, the signal processing chip 11 receives the instruction for power-off and restarting sent from outside, and analyzes the instruction for power-off and restarting to obtain the branch on which the device 01 to be powered off and restarted is located; then the signal processing chip 11 outputs the driving instruction to the relay driving chip 12; the relay driving chip 12 may control the normally open contact of the relay 13 to be open and then closed based on the driving instruction, thereby implementing control of the power-off and restarting of the device. Hence, the technical staff does not need to perform power-off and restarting to the device at the scene, thereby reducing workload and saving time.

The signal processing chip 11 receiving the instruction for power-off and restarting sent form outside may include that: the signal processing chip 11 receives the instruction for power-off and restarting sent from outside via an RS485 chip connected with the signal processing chip 11.

It should be noted that, for the model and working principle of individual components of the device for remote power-off and restarting mentioned in the method for remote power-off and restarting, one may refer to the method embodiment for details, which will not be described here.

Various embodiments of the specification are described in a progressive way. Each embodiment places emphasis on its difference from other embodiments, and for the same or similar parts between various embodiments, one may refer to the description of other embodiments.

The above illustration for the disclosed embodiments enables those skilled in the art to implement or use the disclosure. Many modifications to these embodiments are apparent for those skilled in the art, and the general principle defined herein may be implemented in other embodiments without departing from the spirit or scope of the disclosure. Hence, the disclosure is not limited to the illustrated embodiments herein, but conforms to the widest scope in accordance with the principles and the novel features disclosed herein.

## Claims

1. A device for remote power-off and restarting, comprising:
a signal processing chip configured to receive an instruction for power-off and restarting sent from outside and analyze the instruction for power-off and restarting to obtain a branch on which a device to be powered off and restarted is located;
a relay driving chip, wherein an input of the relay driving chip is connected to an output of the signal processing chip to obtain a driving instruction matching the device to be powered off and restarted output from the signal processing chip; and
a relay with a coil and a normally open contact, wherein the coil is connected to an output of the relay driving chip, one end of the normally open contact is connected to a power supply, the other end of the normally open contact is connected to a supply end of the device to be powered off and restarted, and the coil obtains a digital signal output from the relay driving chip and controls the normally open contact to be open and then closed.

2. The device for remote power-off and restarting according to claim 1, wherein the signal processing chip is configured to receive the instruction for power-off and restarting sent from outside via an RS485 chip connected with the signal processing chip.

3. The device for remote power-off and restarting according to claim 2, wherein an interface chip of the RS485 chip is a Maxim integrated, MAXIM, MAX485 chip.

4. The device for power-off and restarting according to claim 3, wherein the MAXIM MAX485 chip comprises a drive and a receiver connected with each other, and the drive is configured to drive the receiver to receive a signal.

5. The device for remote power-off and restarting according to claim 1, wherein the signal processing chip is a single chip microcomputer.

6. The device for remote power-off and restarting according to claim 5, wherein a model of the single chip microcomputer is 80C51.

7. The device for remote power-off and restarting according to claim 5, wherein an interface of the single chip microcomputer is a JTAG interface.

8. The device for remote power-off and restarting according to claim 1, wherein a model of the relay driving chip is ULN2804A.

9. The device for remote power-off and restarting according to any one of claims 1 to 8, further comprising a power supply circuit, which comprises an inverter-rectifier circuit and a three-terminal voltage stabilizing integrated circuit, wherein
an input of the inverter-rectifier circuit is connected to an external power supply, an output of the inverter-rectifier circuit is connected to an input of the three-terminal voltage stabilizing integrated circuit, and an output of the three-terminal voltage stabilizing integrated circuit is used as an output of the power supply circuit and is connected to a supply end of the device for remote power-off and restarting.

10. The device for remote power-off and restarting according to claim 9, wherein the three-terminal voltage stabilizing integrated circuit is a three-terminal voltage stabilizing integrated circuit chip with a model 7805.

11. A method for remote power-off and restarting, applicable to a device for remote power-off and restarting comprising a signal processing chip, a relay driving chip and a relay, an output of the signal processing chip being connected to an input of the relay driving chip, an output of the relay driving chip being connected to a coil of the relay, one end of a normally open contact of the relay being connected to a power supply, and the other end of the normally open contact being connected to a supply end of a device to be powered off and restarted, comprising:
receiving, by the signal processing chip, an instruction for power-off and restarting sent from outside, analyzing, by the signal processing chip, the instruction for power-off and restarting to obtain a branch on which the device to be powered off and restarted is located, and generating and outputting, by the signal processing chip, a driving instruction matching the device to be powered off and restarted;
obtaining, by the relay driving chip, the driving instruction matching the device to be powered off and restarted output from the signal processing chip, and generating and outputting, by the relay driving ship, a digital signal; and
obtaining, by the coil of the relay, the digital signal output from the relay driving chip, and controlling, by the coil of the relay, the normally open contact to be open and then closed.

12. The method for remote power-off and restarting according to claim 11, wherein the receiving, by the signal processing chip, an instruction for power outage and restarting sent from outside comprises:
receiving, by the signal processing chip, the instruction for power-off and restarting sent from outside via an RS485 chip connected to the signal processing chip.
